# EUROPEAN PATENT APPLICATION

(11) **EP 0 625 450 A2**
(43) Date of publication of application: **23.11.1994**
(21) Application number: 94303521.2
(22) Date of filing: 18.05.1994
(51) Int. Cl.: B60R 22/46, B60R 22/18

(54) **Improvements to pyrotechnic tensioning devices**

(30) Priority: 20.05.1993 GB 9310445
(71) Applicant: ALLIEDSIGNAL LIMITED, Kingswood, Bristol BS15 2NL (GB)
(72) Inventor: Gordon, Ian Alexander, Carlisle, Cumbria CA2 5PE (GB); Evans, Raymomd George, Croft, Warrington (GB); Armstrong, Donald Ellis, Classon, Cumbria, CA5 5EE (GB); Foster, Howard James, Carlisle, Cumbria, CA1 2PF (GB)
(74) Representative: Freeman, Jacqueline Carol

(57) **Abstract**

A pyrotechnic buckle pretensioning device for a three point vehicle safety restraint and which has the buckle (54) connected to a cable (55) supported by a bracket (43) providing a cable guide 46, the bracket carrying a main body (41) incorporating a pyrotechnic gas generator 53 and a piston and locking assembly (58) movable in a cylinder 42 by gas pressure to tension the cable and move the buckle in a restraint tightening sense, the assembly of the bracket to the body being arranged to act as a cover member to retain the pyrotechnic gas generator 51 and to locate a resilient cable seal 49 under compression to maintain improved sealing around the cable 55 against the gas pressure.

## Description

This invention relates to a pyrotechnic tensioning device and relates especially but not exclusively to assembly of pyrotechnic tensioning devices for passenger safety restraints for vehicles.

It is well known to provide energy for activating passenger seat belt pretensioning mechanism by detonating small pyrotechnic devices to produce gas for activating a piston in a cylinder. The piston may be connected via a tensioning cable to the safety restraint. Typically a pyrotechnic pretensioner housing is designed with a side recess or bore to receive the respective pyrotechnic gas generator which is located therein by crimping or peening of the housing to retain it against the high gas pressures and the cable passes outwards through a separate aperture. Such an arrangement of the components is considered undesirable for quantity production especially in view of possible indeterminate gas leaks and the present invention seeks to provide an assembly which is improved for both manufacture and function. In particular, since it is desirable to employ a stranded steel cable there is a tendency for excess gas leakage via the uneven circumferential surface thereof.

According to the present invention there is provided a pyrotechnic pretensioning device for a vehicle passenger safety restraint comprising a housing including a piston and cylinder and a pyrotechnic gas generator operable to generate gas pressure in said cylinder to move the piston, a tensioning cable passing through an aperture in said housing for connection of the piston to the safety restraint and characterised in that said aperture is provided with a resiliently deformable seal member through which the cable passes said deformable seal member being held under compression by the attachment of a cover member.

In order that the invention may be more clearly understood and readily carried into effect the invention will be described by way of an example with reference to the accompanying drawing of which

Figs. 1a and 1b diagrammatically illustrate partially sectioned and plan views respectively of a pyrotechnic pretensioner.

Figs. 2a and 2b illustrate similar views of an alternative

Figs. 3a and 3b illustrate similar views of yet a further alternative and

Figs . 4a and 4b illustrate details of a buckle pretensioner employing the invention.

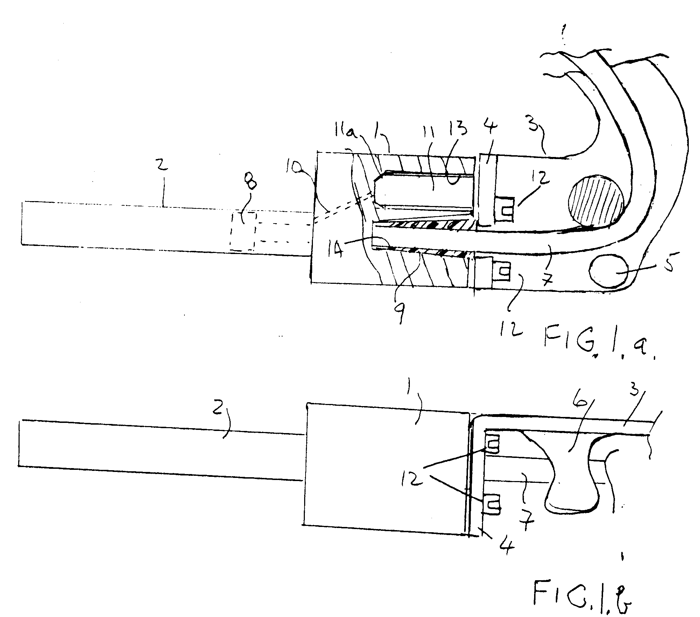

Referring to Figs. 1a and 1b, the pretensioner illustrated therein is intended to be for connection to a buckle anchorage of a three-point passenger seat belt arrangement. When activated the pretensioner therefore acts to shorten the buckle anchorage to tighten the seat belt webbing around an occupant. The pretensioner shown has cast metal body of rectangular shape which carries on one end a cylinder 2, the body 1 and the cylinder being carried on a flange 4 of a mounting bracket 3. Bracket 3 has an aperture 5 for a mounting bolt (not shown) and a capstan 6 via which a multistranded steel cable 7 is guided to the seat belt buckle anchorage, typically via a bowden cable arrangement. The cylinder 2 contains a piston 8 shown in broken outline in Fig. 1a connected to the inner end of the cable 7 the cable passing outwards through body 1 via a frusto conical shaped resilient soft rubber seal 9. The right hand side of piston 8 is in communication via passage 10 with a gas generator 11 which is typically an electrically detonated pyrotechnic device. In accordance with the invention, the cable seal 9 is retained under compression and this and pyrotechnic device 11 are located in side-by-side recesses or bores 13 and 14 so as to be retained by the flange 4 of bracket 3 when the latter is attached to the body. In the present example the flange 4 is attached by screws denoted by reference 12. It will be observed that for secure location, the inner end 11a of the pyrotechnic device 11 is frusto-conical and engages with a complimentary inner surface of the respective bore or recess 13. Moreover the length of 11 is chosen to provide tight compressive engagement when the bracket 3 is attached to body 1. Further, the cable seal 9 being frusto-conical and also of natural length which projects somewhat beyond the outer end of the recess 14, is driven into a good gas sealing relationship with the multistrand cable 7 when the bracket 3 is attached the resilient deformation tending to accommodate the undulating surface of the stranded cable.

Whilst neither the electrical connection to the pyrotechnic device or the cable locking device is shown, it will be appreciated that upon sensing of a predetermined vehicle rate of change of speed indicative of the commencement of a crash situation, the pyrotechnic device 11 is "fired" and pressurises the piston 8 to travel leftwards along the cylinder 2 to pretension the buckle. After such action the buckle is locked by the ratchet or other not shown mechanism to enable the forces generated in the seat belt webbing due to the crash situation and transmitted via the buckle and cable to be resisted.

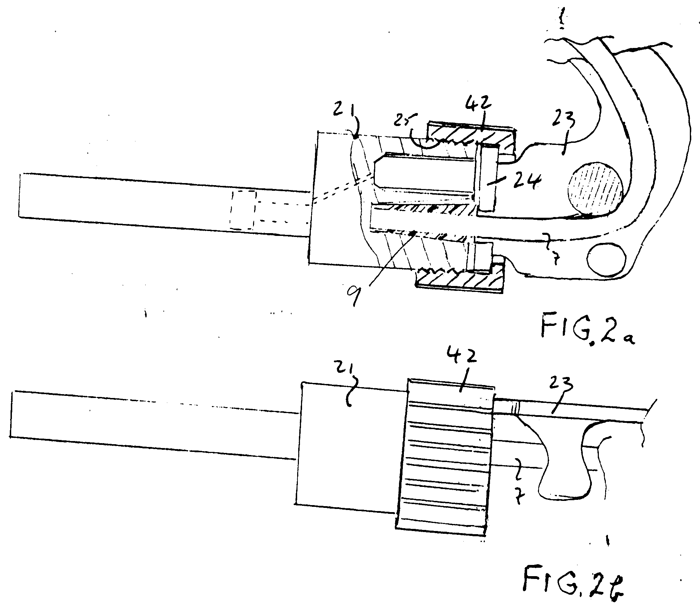

In the alternative embodiment shown in Figs 2a and 2b, the cast metal body now denoted by reference 21 is generally cylindrical and the flange 24 of the mounting bracket 23 is generally circular. This permits it to be attached to the body by a screw-threaded attachment ring 42. In this case the respective screw-thread 25 of the cast metal body 21 is cast thereon. As in the embodiment of Figs 1a and 1b the gas generator and the cable seal are urged into good sealing relationship between the body 21 and the undulating surface of the coated cable 7 by the action of attaching and tightening the flange 24, in this case by screwing home the threaded ring 42.

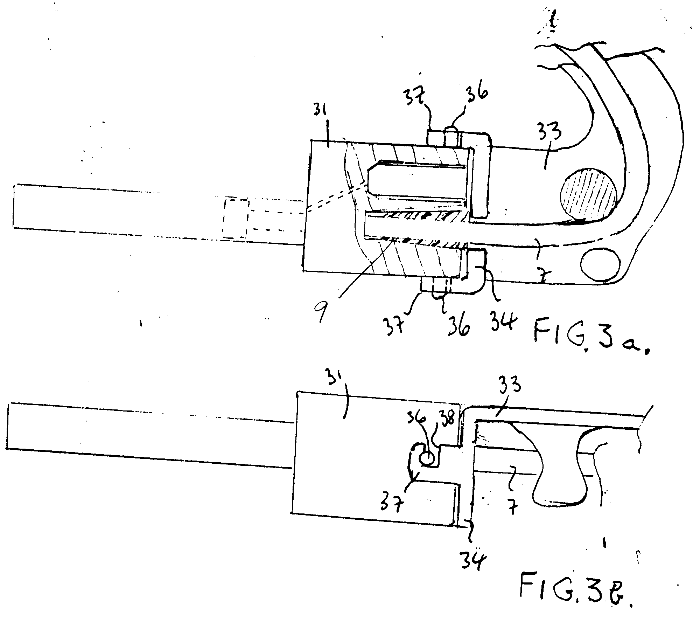

In the further alternative embodiment of Figs.3a and 3b, the body 31 is again generally cylindrical. In this case the body 31 is further provided with diametrically opposed locating studs 36 which on assembly are engaged with supplementary flanges 37 provided on the periphery of the generally circular flange of mounting bracket 33. Flanges 37 have shaped cut-outs 38 which permit engagement with studs 36 by relative rotation of 31 and 33 during assembly whilst overcoming the compressive resilience of the deformable cable seal member 9. As in the embodiments of Figs. 1 and 2, the gas generator and the cable seal are therefore urged into good sealing relationship with the body 31 by the action of attaching and tightening the flange 24, in this case by relative rotation of the body 31 and flange 34, into the interlocked condition shown. If required a resilient disc-shaped insert may also be provided as an interface between 31 and 34, such insert having an aperture to accommodate the cable 7.

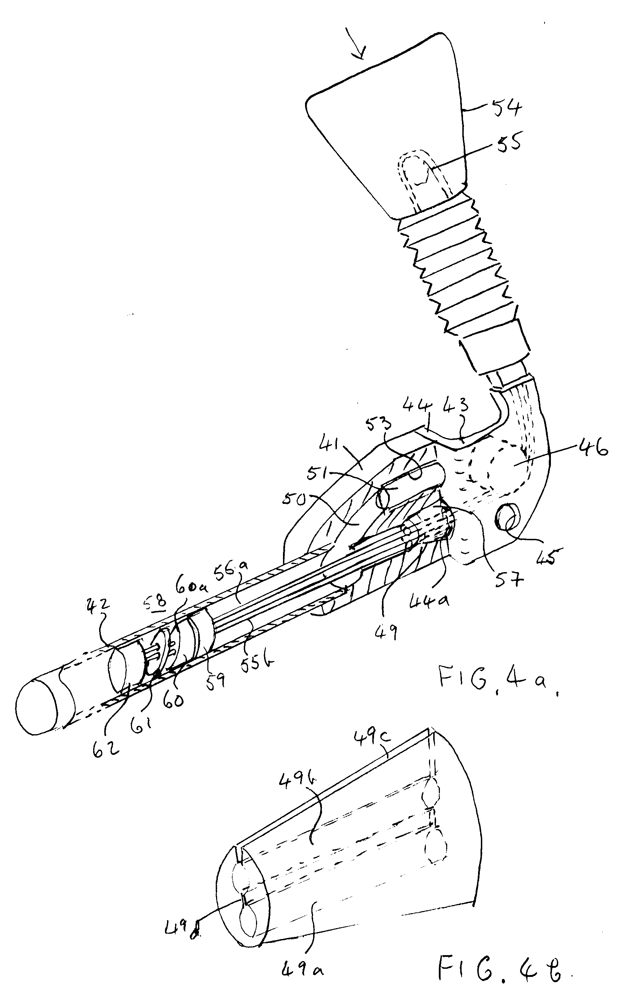

Referring to Fig. 4, this part sectional diagrammatic view of a buckle pretensioner utilising the features of Figs. 1a and 1b and shows a main body casting 41 attached by screws (not shown) to a mounting bracket 43 having a hole 45 to receive a mounting bolt, similar to the arrangement of Fig. 1a. A safety belt buckle 54, typically of a three point fixing type of webbing safety restraint, is secured by a loop 55 of steel-stranded cable the tails 58, 59 of which pass through a compressible plastic gaiter 56 to the bracket 43 at which they pass around a capstan or guide 46, fixed to the bracket 43, to pass through an aperture 44a in the mounting flange 44. The cable tails then pass through respective cable-ways 49a, 49b in a tapered seal member 49 located under axial compression in a recess 57 by the action of the mounting flange 44. the tapered seal member 49 is moulded of a soft resilient synthetic rubber material as shown on a larger scale in Fig. 4b. The mould for member 49 provides for longitudinal breaks 49c and 49d which are normally mutually sealing under the compression but these breaks permit ease of assembly without drawing the cable tails through the cable-ways.
The cable tails 55a, 55b of the cable 55 are finally terminated in a piston and locking assembly denoted by the general reference 58. This comprises a seal which is sealingly slideable along the interior of the pretensioner cylinder or tube 42 which is sealed into the body 41 as shown. Behind the seal 59 there is a cylindrical guide piece which is fast to the cable tails and seal 59 and has a rear face 60 which is at an acute angle to the outward going tails 55a, 55b. These outward going tails then pass loosely through respective apertures in a generally elliptical member 61 before their final fixing in a cylindrical part 62 which has mutually parallel circular ends. The member 61 has a major axis which is somewhat larger than the internal diameter of the tube 42 so that when urged by 60 towards a position at right angles to the tube axis the assembly 58 is locked in the tube against tension in cable 55.

Also mounted in a recess 53 of the body 41 by attachment of the bracket 43, there is a pyrotechnic gas generator 51 as in the arrangement of Fig. 1, communicating with the cylinder 42 by a passage 50. The gas generator is electrically excited via connections which are not shown.

In operation of the pretensioner of Fig. 4a the assembly is attached to a seat rail or chassis member and a buckle tongue of a conventional three point webbing safety restraint is insertable into buckle 54 by the seat occupant. In the event of a sensing mechanism producing a signal indicative of a crash condition the gas generator 51 is excited to communicate gas under pressure via passage 50 to the right hand side of seal 59 to drive the assembly 58 in a leftward direction. This movement is permitted by the action of 60 maintaining member 61 in a position as shown. The seat belt is thereby tightened and upon onset of increased tension in cable 55 the member 62 tends to be drawn rightwards acting upon 61 in a sense to cause it to tend to move into a position at right angles to the tube axis thereby locking assembly 58 in the tube and preventing outward release of the buckle from its pretension position.

By virtue of the invention assembly of the pretensioner can be made straightforward to the extent that the seal 49 and the gas generator are each assembled in to the mechanism and secured by attaching the bracket 43 to the housing 41. Additionally since the seal member 49 is dimensioned in relation to the recess 57 such as to be in compression the cable-ways can provide good mutual sealing with the coated cable or cable tails in spite of their undulating surfaces.

Whilst the embodiment shown in Fig. 4a employs twin cable tails the same type of arrangement can be adapted to a single cable but if the locking mechanism is an assembly such as 58 it is desirable to provide means to ensure the correct orientation of the ellipse (61) and the guide member (60). However alternative locking assemblies may of course be used.

## Claims

1. A pyrotechnic pretensioning device for a vehicle passenger safety restraint comprising a housing (1;21;31;41) including a piston (8;58) and cylinder (2;42) and a pyrotechnic gas generator (11;51) operable to generate gas pressure in said cylinder (2;52) to move the piston (8;58), a tensioning cable (7;55) passing through an aperture in said housing for connection of the piston to the safety restraint and characterised in that said aperture is provided with a resiliently deformable seal member (9;49) through which the cable passes said deformable seal member being held under compression by the attachment of a cover member (4;44).

2. A pyrotechnic pretensioning device as claimed in claim 1, characterised in that said cover member additionally extends across the open end of a recess (14;57) which thereby locates the pyrotechnic gas generator (11;51).

3. A pyrotechnic pretensioning device as claimed in claim 1 or 2, characterised in that said cover member (4;44) is an integral part of a pretensioning device mounting bracket (3;43).

4. A pyrotechnic pretensioning device as claimed in claim 1 or 2, characterised in that said cover member comprises a flange (4;44) of a pretensioner mounting bracket (43).

5. A pyrotechnic pretensioning device as claimed in claim 4, characterised in that said flange (44) is attached to said housing (41) by screws.

6. A pyrotechnic pretensioning device as claimed in claim 4 characterised in that housing is provided with an external screw thread and said flange is attached to said housing (21) by a screw-threaded attachment ring (42) cooperating with said external screw thread.

7. A pyrotechnic pretensioning device as claimed in claim 4, characterised in that said bracket (23) is attached to said housing by means of supplementary flanges (37) of the one part which having means which cooperate with studs (36) of the other part.

8. A pyrotechnic pretensioning device as claimed in any preceding claim characterised in that said seal member 49 is externally tapered to be accommodated in a tapered recess, the natural length thereof being somewhat greater than the internal length of the recess 57.

9. A pyrotechnic pretensioning device as claimed in any preceding claim, characterised in that said seal member (49) is provided with a cut or cuts (49c; 49d) permitting assembly without threading the cable (55) therethrough.
